# EUROPÄISCHE PATENTSCHRIFT

(11) **EP 0 848 640 B1**
(45) Veröffentlichungstag und Bekanntmachung des Hinweises auf die Patenterteilung: **31.03.1999**
(21) Anmeldenummer: 96928269.8
(22) Anmeldetag: 05.09.1996
(51) Int. Cl.: B01D 53/50, B01D 53/78

(54) **VERFAHREN UND EINRICHTUNG ZUR NASSEN ABSCHEIDUNG SAURER GASE**
PROCESS AND DEVICE FOR SCRUBBING ACIDIC GASES
PROCEDE ET DISPOSITIF DE SEPARATION PAR VOIE HUMIDE DE GAZ ACIDES

(30) Priorität: 07.09.1995 AT 1483/95
(43) Veröffentlichungstag der Anmeldung: 24.06.1998
(73) Patentinhaber: AUSTRIAN ENERGY & ENVIRONMENT SGP/WAAGNER-BIRO GmbH, A-1211 Wien (AT)
(72) Erfinder: LANG, Diethard; Austrian Energy & Environment, A-1211 Wien (AT); GLASNER, Alfred; Austrian Energy & Environment, A-8021 Graz (AT); CHYBIN, Dieter; Austrian Energy & Environment, A-8021 Graz (AT); OBWALLER, Georg; Austrian Energy & Environment, A-8021 Graz (AT)
(74) Vertreter: Rieberer, Stefan, Dipl.-Ing.
(86) Internationale Anmeldenummer: AT9600156
(87) Internationale Veröffentlichungsnummer: WO9709111

(56) Entgegenhaltungen:
- EP-A- 0 162 536
- EP-A- 0 682 972
- DE-A- 3 031 951
- DE-A- 4 226 726
- DE-A- 4 331 415
- US-A- 4 828 768

## Beschreibung

Die Erfindung betrifft ein Verfahren zur nassen Abscheidung saurer Gase, insbesondere SO₂, HCl und H₂S, aus Rauchgasen mittels alkalischer oder erdalkalischer Absorbentien, Kalkstein und/oder Dolomit, bei dem die Rauchgase mit einer in Tröpfchen zerlegten Suspension und/oder Lösung in mehreren Stufen gewaschen werden und in Strömungsrichtung der Rauchgase gesehen diese in der ersten Stufe im Gegenstrom zu den in einen Sprühturm eingesprühten Flüssigkeitströpfchen und in der zweiten Stufe im Gleichstrom zu den in einen Wäscher mit einer oder mehreren verengten Kehlen eingesprühten Flüssigkeitströpfchen und zur Verhinderung des Flüssigkeitsrücklaufs in die Beschleunigungsstrecke vor der engsten Stelle der Kehle entgegen der Richtung der Schwerkraft geführt werden, wobei die Waschflüssigkeit bereits vor der Beschleunigungsstrecke, die durch die Kehlen gebildet wird, oder am Anfang derselben in Tröpfchen zerlegt wird und eine Einrichtung zur Durchführung des Verfahrens.

In der DE-A-43 31 415 ist ein Verfahren zur Behandlung von Gasen in zwei Waschstufen geoffenbart, bei dem die Waschflüssigkeit in beiden Stufen als im wesentlichen gleichförmig verteilter Regen nach unten fällt und vom Gasstrom getrennt wird.

Es ist aus der AT-B-333 588 bekannt, aus SO₂-haltigen Rauchgasen mittels einer Erdalkaliaufschlämmung das SO₂ in zwei Stufen auszuwaschen und wieder verwendbares Bisulfit zu bilden, wobei durch die mehrfache Rauchgasumlenkung ein hoher Druckverlust eintritt. Waschflüssigkeitsselig ist ferner der Energieaufwand für das Umpumpen der Waschflüssigkeit mit dem Absorptionsmittel sowie für die Versprühung der Waschflüssigkeit in den einzelnen Naßwäschern beträchtlich. Dies gilt besonders dann, wenn ein zu deponierendes Produkt hergestellt wird.

Die Erfindung hat es sich zur Aufgabe gestellt, diesem Nachteil zu begegnen und mit billigsten Absorptionsmittel, wie Kalkstein und/oder Dolomit eine kostengünstige Abscheidung für saure Rauchgasbestandteile, insbesondere nach Kraftwerksdampferzeugern, zu erreichen, wobei das verbrauchte Absorptionsmittel gegebenenfalls problemlos deponiert werden kann.

Das erfindungsgemäße Verfahren ist dadurch gekennzeichnet, daß die Tröpfchen nach der zweiten Stufe mit einer Reaktionszone, die zwischen den Kehlen und dem Eintritt eines ersten Tropfenabscheiders liegt, vorzugsweise mit einem Waschflüssigkeits-Rauchgasvernäitnis < 5l/m³, in annähernd parallelen und konzentrischen Kanalen um 180° in Richtung der Schwerkraft in dem ersten Tropfenabscheider umgelenkt und anschließend einem weiteren Tropfenabscheider zugeführt werden. Ausgestaltungen des erfindungsgemäßen Verfahrens sind in den Unteransprüchen 2-7 angegeben.

Die erfindungsgemäße Einrichtung zur Durchführung des Verfahrens ist dadurch gekennzeichnet, daß in Strömungsrichtung der Rauchgase nach einem Waschturm mit einer Vorrichtung zur Versprühung einer Waschflüssigkeit ein Naßwäscher mit anschließendem zweistufigem Tropfenabscheider vorgesehen, insbesondere auf den Waschturm aufgesetzt, ist, wobei als Waschflüssigkeit eine karbonathaltige Suspension für die Absorption der sauren Gasbestandteile verwendet wird, und die Einrichtung parallele und konzentrische Kanäle zur Umlenkung der Tröpfchen um 180° in Richtung der Schwerkraft vorgesehen sind und daß neben dem Waschturm ein als Oxidationstank ausgebildeter Suspensionsbehälter angeordnet ist, dessen Flüssigkeitsspiegel in Höhe der Sprühdüsen des Naßwäschers vorgesehen ist und der Naßwäscher Kehlen zur Beschleunigung der Rauchgase entgegen der Richtung der Schwerkraft mit einer Einschnürung der Gasströmung zwischen 0-50%, vorzugsweise 20%, aufweist, und die Sprühdüsen zum Einsprühen der Flüssigkeit unterhalb der Kehlen angeordnet sind wobei die Sprühdüsen des Naßwäschers und die Vorrichtung zur Versprühung der Waschflüssigkeit im Waschturm derart angeordnet sind, daß die Flüssigkeitströpfchen im Naßwäscher in Richtung der Gasströmung und im Waschturm entgegen der Gasströmung eingeführt werden und die Kehlen als taschenförmige Auffangrinnen mit einer Abrißkante ausgebildet sind. Ausgestaltungen der erfindungsgemäßen Einrichtung sind in den Unteransprüchen 9 und 10 angegeben.

Die Erfindung ist in den angeschlossenen Figuren 1 bis 3 beispielsweise und schematisch dargestellt.
Fig. 1 zeigt ein Schaltbild der erfindungsgemäßen Einrichtung.
Fig. 2 zeigt vereinfacht eine konstruktive Ausbildung des Naßwäschers und des ersten Tropfenabscheiders im Detail.
Fig. 3 zeigt vereinfacht eine zweite konstruktive Ausbildung des Naßwäschers im Detail.

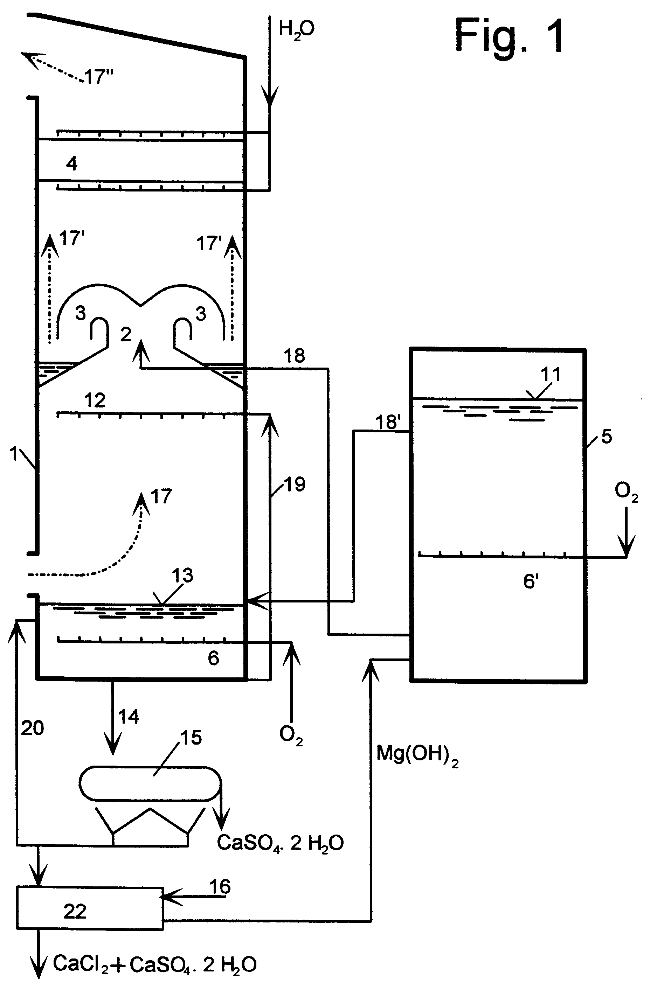

In Fig. 1 ist auf einem Waschturm 1 ein Naßwäscher 2 aufgesetzt, dem sich ein Tröpfchenabscheider in Form von zwei Stufen 3 und 4 anschließt. Dieses Konstruktionsteil wird von einem Rauchgasstrom 17, 17', 17'' von unten nach oben durchströmt, wobei die sauren Rauchgasbestandteile, wie zB SO₂, HCl, und H₂S aus diesem entfernt werden. Dies erfolgt dadurch, indem in einem Suspensionsbehälter 5 Kalkstein oder eine kalksteinhältige Substanz, wie zB Dolomit, in Staubform aufgeschlämmt wird und die erzeugte Suspension über die Leitung 18 in den Sprühdüsen 23 des Naßwäschers 2 zerstäubt wird, wobei zur Oxidation des bei der Absorption entstehenden Sulfits zum Sulfat im Suspensionsbehälter 5 mit einem Flüssigkeitsspiegel (11) eine Oxidationsstufe 6' vorgesehen ist, in der ein sauerstoffhältiges Gas eingeblasen wird. Vom Suspensionsbehälter 5 führt ferner eine Leitung 18' in den Sumpf 13 des Waschturmes 1, sodaß auch dieser mit einer Karbonatsuspension versorgt wird, die über die Zirkulationsleitung 19 im Waschturm in der Sprühebene 12 eingesprüht wird, wobei der Rauchgasstrom 17 im Gegenstrom zu den fallenden Tröpfchen gewaschen und für einen einstufigen Waschturm eine gute Abscheideleistung mit etwa 50% erreicht wird. In diesem Sinne kann die Waschflüssigkeit im Waschturm 1 gegenüber dem Naßwäscher 2 einen geringeren Restkarbonatgehalt aufweisen. Durch die zweite Stufe 2 kann der Abscheidegrad auf über 99% angehoben werden.

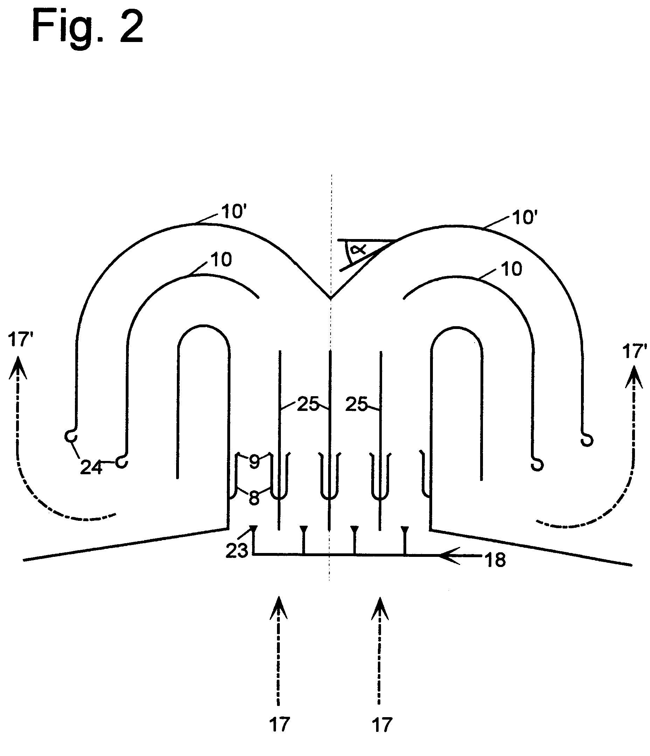

Der Naßwäscher 2 in Fig. 2 weist verengte Kehlen 8 auf, wobei das obere Ende der Kehle 8 durch eine Abrißkante 9, die den Kehlenquerschnitt weiter verengt, gebildet wird. Die Kehle 8, die auch als Beschleunigungszone bezeichnet wird, weist eine geringe Einschnürung zwischen 0% und 50%, vorzugsweise 20% des Strömungsquerschnittes auf, sodaß eine Strömungsgeschwindigkeit von kleiner als 23 m/s erreicht wird, die in der Reaktionszone auf kleiner als 18 m/s reduziert wird. Das Verhältnis von Rauchgasgeschwindigkeit in der Beschleunigungszone zu Rauchgasgeschwindigkeit in der Reaktionszone soll etwa 0,7 betragen.

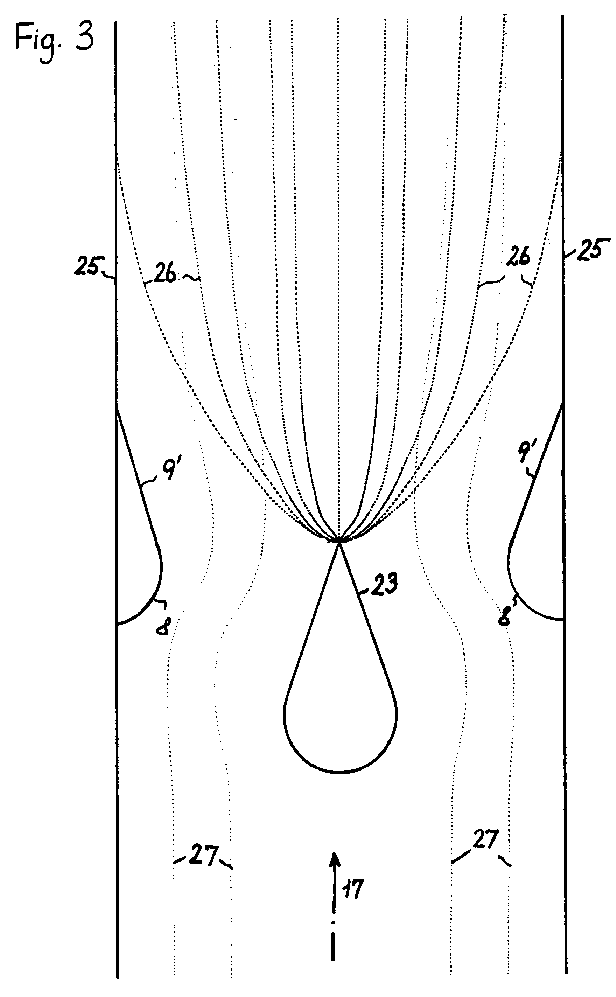

In Fig. 3 ist im Detail die Einschnürung, bzw. ein Teil der Kehle 8 des Naßwäschers 2 dargestellt, wobei die Gasströmung 17 durch Strömungslinien 27 dargestellt ist. Diese Gasströmung wird durch die Einschnürung und den anschließenden Diffusor 9' so beschleunigt, daß die aus der Düse 23 entströmende Flüssigkeit die anschließende Wandung 25 möglichst wenig berührt und die Wandwasserbildung gering bleibt. Die angestrebten Tröpfchenbahnen sind mit 26 bezeichnet. Die Rauchgasgeschwindigkeit in der Kehle 8 liegt unter 18 m/s, in der Reaktionszone unter 15 m/s. Bei dieser Ausführung der Kehlen 8 ist unter den Düsenreihen der Sprühdüsen 23, aber oberhalb der Sprühebene 12 des Waschturmes 1, eine Tropfenfangeinrichtung angeordnet.

Die erwähnten Rauchgasgeschwindigkeiten genügen für eine gute Abscheidung und bedingen einen geringen Strömungsverlust, sodaß das Saugzugebläse wirtschaftlich ausgelegt werden kann. Die Einschnürung des Strümungskanals bewirkt eine verbesserte Tropfenzerstäubung der Waschflüssigkeit und lenkt gleichzeitig die Tröpfchen in eine annähernd vertikale Flugbahn, sodaß der Wandwasseranteil in der angeschlossenen Reaktionszone niedrig gehalten wird. Die Strecke nach der Kehle 8 bis zum Eintritt in den ersten Tröpfchenabscheider 3 dient als Reaktionszone in der die sauren Gasbestandteile an das Absorptionsmittel gebunden werden und sich aus dem Karbonat Sulfite, Sulfate bzw. Chloride bilden. Das vom Absorptionsmittel abgegebene CO₂ wird mit dem Rauchgasstrom abgeführt.

Der anschließende erste Tropfenabscheider 3 besteht aus mehreren annähernd parallelen und konzentrischen Kanälen, in welchen das Rauchgas aus der Aufwärtsströmung um 180° in Richtung der Schwerkraft umgelenkt wird, wobei die abgeschiedenen Tröpfchen in Taschen 24 an den Enden der Leitbleche 10 ,10' gesammelt und einer Rückführung (die nicht dargestellt ist) zugeführt werden. Hiebei ist für die Tröpfchenabscheidung wesentlich, daß das Verhältnis des Abstandes der Leitbleche 10 10' im Umlenkkrümmer zum Radius der Krümmung des Strömungskanals kleiner als 0,5, insbesondere 0,3 ist.

Die Gasströmung 17 wird durch die Einschnürung der Kehlen 8 so beschleunigt, daß die aus den Sprühdüsen 23 entströmende Flüssigkeit die anschließende Wandung 25 möglichst wenig berührt und die Wandwasserbildung gering bleibt. Die Rauchgasgeschwindigkeit in der Kehle 8 liegt je nach Ausführung der Kehle unter 18 m/s bzw. unter 23 m/s. Diese Auslegung ermöglicht den Entfall der Wandung 25 ohne daß bei mehreren parallel geschalteten Sprühdüsen 23 eine Verschmelzung der Tröpfchen benachbarter Sprühdüsen in größerem Umfang stattfindet und die Reaktionszone mit besten Voraussetzungen beaufschlagt wird.

Nach Fig. 2 sind die Sprühdüsen 23 so angebracht, daß die Waschflüssigkeit bereits vor der Kehle 8 oder an deren Beginn auftrifft und somit die Waschflüssigkeit bereits vor oder am Beginn der Beschleunigungsstrecke in Tröpfchen zerlegt wird. Der Düsenvordruck sollte hierfür zwischen 0,5 und 1,5 bar liegen und der Düsenstrahl sollte einen Sprühwinkel kleiner als 90° besitzen.

Im Teillastbereich, wenn die Rauchgasgeschwindigkeit in der Reaktionsstrecke kleiner als 10 m/s ist, tritt verstärkt Wandwasserbildung auf und der Wandwasserfilm läuft nach unten ab. Um einen Rücklauf in die Beschleunigungsstrecke zu verhindern, sind die Kehlen 8 in Fig. 2 als taschenförmige Auffangrinnen ausgeführt, aus denen die angesammelte Flüssigkeit abgeführt wird. Die Abrißkanten 9 an den Kehlen 8 sollen den in der Beschleunigungszone gebildeten Wandwasserfilm in Tropfen dispergieren. Es wird hiermit die Bildung großer Tropfen verhindert und es läuft keine Flüssigkeit aus der Kehle 8 nach unten. Es muß somit unter dem Naßwäscher 2 keine Fangtasse für Tropfen angeordnet werden.

Damit der Wandfilm im Tropfenabscheider 3, vor allem bei Teillastbetrieb, nicht zu stark wird, weist die erste Stufe des Tropfenabscheiders 3 Leitbleche 10, 10' auf, wobei das Verhältnis des Abstandes der Leitbleche 10, 10' des Kanals im Umlenkkrümmer zum Radius der Krümmung des Strömungskanals kleiner als 0,5 ist und das äußere Leitblech 10' in der Mitte als V-förmige Rinne mit einem Öffnungswinkel > 90° ausgebildet ist, sodaß die Leitbleche 10, 10' im Bereich der Reaktionszone in jedem Punkt mit der Horizontalen einen Winkel α von nicht größer als 45° einschließen.

Der Wasservertust im gesamten Naßwäscher bleibt auf die Verdampfungsverluste und Ausschleusverluste des CaCl₂ beschränkt, wodurch der Wasserverbrauch gering ist. Diese Verdampfungsverluste werden durch beidseitige Besprühung und Waschung des zweiten Tröpfchenabscheiders 4 ersetzt. Die Waschung läßt keine Verkrustungen entstehen. Das abtropfende Wasser gelangt mit den abgeschiedenen Tröpfchen in die hier nicht dargestellte Rückführung und damit wieder in den Suspensionsbehälter 5.

Im Sumpf 13 des Waschturmes 1 bildet sich ein Schlamm, der im wesentlichen bei Verwendung von Kalkstein als Absorptionsmittel Gips darstellt, der über eine Austragvorrichtung 14 auf eine Entwässerungseinrichtung 15 aufgebracht wird, wobei der Großteil des abgeschiedenen CaCl₂-haltigen Wassers über Leitung 20 in den Sumpf 13 rückgeführt wird. Der Sumpf 13 wird durch eine Oxidationsstufe 6 mit sauerstoffhältigem Gas versorgt.

Der Gips selbst kann entsprechend seiner Reinheit in der Baustoffindustrie weiterverwendet werden, bzw. kann ohne Schwierigkeiten deponiert werden. Wird hingegen statt Kalkstein Magnesiumkarbonathältiger Kalkstein, wie zB Dolomit, verwendet, so entsteht neben Gips Magnesiumsulfat als wertvolles Beiprodukt, welches durch Kalkmilchzugabe 16 in einer nachgeschalteten Umfällung 22 in Gips umgewandelt und ausgeschieden werden kann, wobei das entstehende gelöste Magnesiumhydroxyd mit dem Kreislauf Wasser zusammen mit eventuell zugegebenen Schwermetallkatalysatoren in den Wäscher rückgeführt, bzw. zum Verkauf ausgeschleust wird. Ein Teil der abgeschiedenen Flüssigkeit verläßt die Umfällung 22 als CaCl₂-belastetes Abwasser. Im Rahmen der Erfindung kann auch Ammoniumsulfat in den Naßwäscher eingebracht werden, wodurch sich die Abscheidung im Naßwäscher verbessert, das hierbei entstehende Ammonium wird nach Kalkmilchzugabe in der Umfällung 22 und anschließender Strippung aus der abfließenden Waschflüssigkeit entfernt und schließlich dem Naßwäscher wieder zugeführt.

## Patentansprüche

1. Verfahren zur nassen Abscheidung saurer Gase, insbesondere SO₂, HCl und H₂S, aus Rauchgasen mittels alkalischer oder erdalkalischer Absorbentien, Kalkstein und/oder Dolomit, bei dem die Rauchgase mit einer in Tröpfchen zerlegten Suspension und/oder Lösung in mehreren Stufen gewaschen werden und in Strömungsrichtung der Rauchgase gesehen diese in der ersten Stufe (1) im Gegenstrom zu den in einen Waschturm eingesprühten Flüssigkeitströpfchen und in der zweiten Stufe (2) im Gleichstrom zu den in einen Naßwäscher mit einer oder mehreren verengten Kehlen (8) eingesprühten Flüssigkeitströpfchen und zur Verhinderung des Flüssigkeitsrücklaufs in eine Beschleunigungszone vor der engsten Stelle der Kehle (8) entgegen der Richtung der Schwerkraft geführt Werden, wobei die Waschflüssigkeit bereits vor der Beschleunigungszone, die durch die Kehlen (8) gebildet wird, oder am Anfang der Beschleunigungszone in Tröpfchen zerlegt wird, **dadurch gekennzeichnet,** daß die Tröpfchen nach der zweiten Stufe (2) mit einer Reaktionszone, die zwischen den Kehlen (8) und dem Eintritt eines ersten Tropfenabscheiders (3) liegt, vorzugsweise mit einem Waschflüssigkeits-Rauchgasverhältnis < 5l/m³, in annähernd parallelen und konzentrischen Kanälen um 180° in Richtung der Schwerkraft in dem ersten Tropfenabscheider (3) umgelenkt und anschließend einem weiteren Tropfenabscheider (4) zugeführt werden.

2. Verfahren nach Anspruch 1, **dadurch gekennzeichnet,** daß die Rauchgasgeschwindigkeit in der Kehle (8) des Naßwäschers (2) <23m/s, vorzugsweise <18m/s und/oder in der Reaktionszone <18m/s, vorzugsweise <15m/s, gehalten wird, wobei das Verhältnis von Rauchgasgeschwindigkeit in der Reaktionszone zur Rauchgasgeschwindigkeit in der Beschleunigungszone 0,7 beträgt und daß die Tröpfchen im Naßwäscher (2) durch die Strömungsgeschwindigkeit in der Kehle (8) und in der anschließenden nicht verengten Reaktionszone entgegen der Richtung der Schwerkraft in eine vertikale Flugbahn umgelenkt und von der begrenzenden Wand (25) möglichst abgelenkt werden, sodaß der Wandwasseranteil in der Reaktionszone vermindert wird.

3. Verfahren nach Anspruch 1, **dadurch gekennzeichnet,** daß die Rauchgasgeschwindigkeit in dem Strömungskanal des ersten Tropfenabscheiders (3) während der Umlenkung der Strömung zur Verminderung örtlicher Turbulenzen und Rückströmungen beschleunigt wird und daß als Waschflüssigkeit im Naßwäscher (2) eine kalkstein- oder dolomitstaubhaltige Suspension mit einem hohen Restkarbonatwert verwendet wird, deren Dichte vorzugsweise auf einen Wert > 50g/l gehalten wird, wobei der Restkarbonatgehalt im Naßwäscher (2) größer als im Waschturm (1) ist und wobei zumindest ein Teil des bei der Absorption von SO₂ entstehenden Sulfits der aus dem Waschturm (1) bzw. Naßwäscher (2) gebrauchten Suspension zu Sulfat oxidiert wird

4. Verfahren nach Anspruch 3, **dadurch gekennzeichnet,** daß zur Oxidation des Sulfits im Sumpf (13) des Waschturmes (1) und/oder in einem Oxidationstank (5) Luft und/oder Rauchgas (6, 6') eingesetzt wird und daß zur Erreichung einer geringen Pumpleistung das Flüssigkeitsniveau (11) des Oxidationstanks (5) auf der Höhe der Sprühdüsen (23) des Naßwäschers (2) vorgesehen ist.

5. Verfahren nach Anspruch 3, **dadurch gekennzeichnet,** daß aus der ablaufenden gebrauchten Waschflüssigkeit Magnesiumhydroxid und/oder eventuell zugegebene Schwermetallkatalysatoren durch Fällung mit Ca(OH)₂ abgetrennt und in den Oxidationssumpf (5) rückgeführt werden.

6. Verfahren nach Anspruch 1, **dadurch gekennzeichnet,** daß (NH₄)₂SO₄ in den Naßwäscher (2) eingebracht wird und das Ammonium nach Zusatz von Ca(OH)₂ und durch Strippung aus der abströmenden Waschflüssigkeit oder der Suspension entfernt und wieder dem Naßwäscher (2) zugeführt wird.

7. Verfahren nach Anspruch 1, **dadurch gekennzeichnet,** daß die eingedüste Waschflüssigkeit vor oder am Anfang der Beschleunigungszone aufgegeben wird, indem der Düsenstrahl vor oder am Anfang der Beschleunigungszone auftrifft, wobei der Düsenvordruck zwischen 0,5 und 1,5 bar liegt und der Düsenstrahl einen Sprühwinkel < 90° besitzt und die Wandflüssigkeit in der Beschleunigungszone am Ende der Kehle (8) dispergiert wird.

8. Einrichtung zur Durchführung des Verfahrens nach mindestens einem der Ansprüche 1-7, **dadurch gekennzeichnet,** daß in Strömungsrichtung der Rauchgase nach einem Waschturm (1) mit einer Vorrichtung (12) zur Versprühung einer Waschflüssigkeit ein Naßwäscher (2) mit anschließendem zweistufigem Tropfenabscheider (3, 4) vorgesehen, insbesondere auf den Waschturm (1) aufgesetzt, ist, wobei als Waschflüssigkeit eine karbonathaltige Suspension für die Absorption der sauren Gasbestandteile verwendet wird, und die Einrichtung parallele und konzentrische Kanäle zur Umlenkung der Tröpfchen um 180° in Richtung der Schwerkraft vorgesehen sind und daß neben dem Waschturm (1) ein als Oxidationstank ausgebildeter Suspensionsbehälter (5) angeordnet ist, dessen Flüssigkeitsspiegel (11) in Höhe der Sprühdüsen (23) des Naßwäschers (2) vorgesehen ist und der Naßwäscher (2) Kehlen (8) zur Beschleunigung der Rauchgase entgegen der Richtung der Schwerkraft mit einer Einschnürung der Gasströmung zwischen 0-50%, vorzugsweise 20%, aufweist, und die Sprühdüsen (23) zum Einsprühen der Flüssigkeit unterhalb der Kehlen (8) angeordnet sind wobei die Sprühdüsen (23) des Naßwäschers (2) und die Vorrichtung (12) zur Versprühung der Waschflüssigkeit im Waschturm (1) derart angeordnet sind, daß die Flüssigkeitströpfchen im Naßwäscher (2) in Richtung der Gasströmung und im Waschturm (1) entgegen der Gasströmung eingeführt werden und die Kehlen (8) als taschenförmige Auffangrinnen mit einer Abrißkante (9) ausgebildet sind.

9. Einrichtung nach Anspruch 8, **dadurch gekennzeichnet,** daß die erste Stufe des Tropfenabscheiders (3) Leitbleche (10, 10') aufweist, wobei das Verhältnis des Abstandes der Leitbleche (10, 10') des Kanals im Umlenkkrümmer zum Radius der Krümmung des Strömungskanals kleiner als 0,5 ist und das äußere Leitblech (10') in der Mitte als V-förmige Rinne mit einem Öffnungswinkel > 90° ausgebildet ist, sodaß die Leitbleche (10, 10') im Bereich der Reaktionszone in jedem Punkt mit der Horizontalen einen Winkel α von nicht größer als 45° einschließen und daß im Sumpf (13) des Waschturms (1) eine Austrageinrichtung (14) für den anfallenden Schlamm vorgesehen ist, der eine Entwässerungseinrichtung (15), wie Bandfilter, nachgeschaltet ist und daß bei der Verwendung von MgCO₃-haltigem CaCO₃ zur Absorption eine Kalkzugabeeinrichtung (16) zur Umwandlung des vorhandenen MgSO₄ in CaSO₄ und Mg(OH)₂ vorgesehen ist.

10. Einrichtung nach Anspruch 8, **dadurch gekennzeichnet,** daß unter den Düsenreihen (23) des Naßwäschers (2) und oberhalb der Sprühebene (12) des Waschturmes (1) eine Tropfenfangeinrichtung angeordnet ist, wobei jede Kehle mit einem Diffusor versehen ist, und daß ein Diffusor (9') nach der Kehle (8) einen Öffnungswinkel zwischen 7° und 30° aufweist und daß die erste Stufe des Tropfenabscheiders (3) einen Kanal eines Umlenkkrümmers formende Leitbleche (10, 10') aufweist, wobei das Verhältnis des Abstandes der Leitbleche (10, 10') des Kanals im Umlenkkrümmer zum Radius der Krümmung des Strömungskanals kleiner als 0,5 ist.

## Claims

1. Process for scrubbing acidic gases, particularly SO₂, HCl and H₂S, from smoke gases by means of alkaline or alkaline-earth absorbing substances, limestone and/or dolomite, wherein the smoke gases are scrubbed in a plurality of steps by an atomized suspension and/or solution and the smoke gases, when seen in the direction of flow, are conveyed in the first stage (1) in counterflow to the droplets of the liquid spread into a washing tower, and in the second stage (2) in co-current flow with the droplets of the liquid spread into a scrubber having one or more constrictions (8) and are conveyed in counter-direction to gravity before the narrowest part of the channel section (8) to prevent any return flow of liquid into an acceleration zone, the scrubbing liquid being atomized already before the acceleration zone formed by the constrictions (8) or at the beginning of the acceleration zone, **characterised in** that the droplets, preferably with a ratio of scrubbing liquid to smoke gas of < 5l/m³, are diverted after the second stage (2) with a reaction zone, which is situated between the constrictions (8) and the entrance of a first drop separator (3), by 180° in the direction of gravity in approximately parallel and concentrical channels into the first drop separator (3) and are subsequently fed to another drop separator (4).

2. Process according to claim 1, **characterised in** that the smoke gas velocity within the constriction (8) of the scrubber (2) is maintained at <23m/s, preferably <18m/s and/or in the reaction zone at <18m/s, preferably <15m/s, the ratio of smoke gas velocity in the reaction zone to the smoke gas velocity in the acceleration zone being 0.7, and that the droplets are diverted against the direction of gravity into a vertical flight path by the flow velocity in the constriction (8) and in the subsequent, non-narrowing reaction zone deviating them from the delimiting wall (25) as much as possible so that the wall water fraction is diminished in the reaction zone.

3. Process according to claim 1, **characterised in** that the smoke gas velocity of the first drop separator (3) is accelerated during diversion of the flow for diminishing local turbulences and return flow, and that a limstone or dolomite dust containing suspension having a high residual carbonate value is used as a scrubbing liquid within the scrubber (2), the density of which being preferably kept at a value of > 50g/l, wherein the residual carbonate contents within the scrubber (2) is higher than within the wshing tower (1), and wherein at least part of the sulphite of the used suspension from the washing tower (1) or the scrubber (2), which sulphite is generated upon absorption of SO2, is oxidised to sulphate.

4. Process according to claim 3, **characterised in** that air and/or smoke gas (6, 6') is used for oxidising the sulphite in the sump (13) of the washing tower (1) and/or in a oxidation tank (5), and that the liquid level (11) of the oxidation tank (5) is at the level of the spraying nozzles (23) of the scrubber to obtain a small pumping power.

5. Process according to claim 3, **characterised in** that magnesium hydroxide and/or heavy metal catalysts, optionally added, are separated from the draining scrubbing liquid used by precipitation with Ca(OH)₂ and are recycled into the oxidation sump (5).

6. Process according to claim 1, **characterised in** that (NH₄)₂SO₄ is fed into the scrubber (2), and the ammonium is removed after adding Ca(OH)₂ and by stripping from the draining scrubbing liquid or suspension and is recycled to the scrubber (2).

7. Process according to claim 1, **characterised in** that the scrubbing liquid introduced by nozzle is fed in either before or at the beginning of the acceleration zone, the nozzle jet impinging either before or at the beginning of the acceleration zone, wherein the nozzle prepressure is between 0.5 and 1.5 bar and the nozzle jet has a spraying angle of <90° and the wall liquid is dispersed in the acceleration zone at the end of the constrictions (8).

8. Device for carrying out the process according to at least one of claims 1-7, **characterised in** that a scrubber (2) comprising means (12) for spraying a scrubbing liquid and an adjoining two-stage drop separator (3, 4), particularly being placed onto the washing tower (1), are provided in the direction of flow of the smoke gases after a washing tower (1), a carbonate containing suspension for absorbing acidic gas components being used as a scrubbing liquid, and that parallel and concentric channels for diverting droplets by 180° in the direction of gravity are provided in the device, and that a suspension vessel (5) formed as an oxidation tank is arranged next to the washing tower (1), the liquid level (11) of which being provided at the level of the spraying nozzles (23) of the scrubber (2), and that the scrubber (2) includes constrictions(8) for accelerating the smoke gases in counter direction of gravity, the constriction of the gas flow being between 0 - 50%, preferably 20%, and that the spraying nozzles (23) for spraying the liquid in are below the constrictions (8), the spraying nozzles (23) of the scrubber (2) and the device (12) for spraying the scrubbing liquid in the washing tower (1) are arranged such that the droplets of the liquid are introduced in the direction of gas flow within the scrubber (2), but in counter direction to the gas flow within the washing tower, the constrictions being formed as pocket-shaped drip gutters having a breakaway edge (9).

9. Device according to claim 8, **characterised in** that the first stage of of the drop separator (3) includes guiding plates (10, 10'), the ratio of the distance of the guiding plates (10, 10') of the channel in the diverting elbow to the radius of curvature of the flow channel is smaller than 0.5, and the the middle of the outer guiding plate (10') is formed as a V-shaped channel having an angle of Vee >90° so that the guiding plates (10, 10') form an angle α with a horizontal plane not greater than 45° in each point within the region of the reaction zone, and that a discharge device (14) for the developing sludge is provided in the sump (13) of the washing tower (1), dewatering means (15), such as a belt filter, being postponed, and that lime supply means (16) are provided in case of the use of CaCO₃ containing MgCO₃ for converting existent MgSO₄ into CaSO₄ and Mg(OH)₂.

10. Device according to claim 8, **characterised in** that mist collecting means are provided below the arrays of nozzles (23) of the scrubber (2) and above the spraying plane (12) of the washing tower (1), each constriction being provided with a diffusor, and that a diffuser (9') after the constriction (8) has an angle of Vee between 7° and 30°, and that the first stage of the drop separator (3) includes guiding plates (10, 10') forming a channel of a diverting elbow, the ratio of the distance of the guiding plates (10, 10') of the channel in the diverting elbow to the bending radius of the flow channel being smaller than 0.5.

## Revendications

1. Procédé de séparation par voie humide de gaz acides, en particulier de SO₂, HCl et H₂S, à partir de gaz de fumées, au moyen d'absorbants alcalins ou alcalino-terreux, de pierre à chaux et/ou dolomite, pour lequel les gaz de fumées sont lavés en plusieurs étapes avec une suspension et/ou une solution, décomposée en gouttelettes, et en observant dans la direction d'écoulement des gaz de fumées, ceux-ci sont guidés, dans le premier étage (1), à contre-courant par rapport aux gouttelettes de liquide ayant été introduites par aspersion dans une tour de lavage et, dans le deuxième étage (2), en équicourant par rapport aux gouttelettes de liquide ayant été introduites dans une tour de lavage dotée d'un ou plusieurs goulots d'étranglement (8) et, pour entraver le retour de liquide sont guidés dans une zone d'accélération située avant le point le plus étroit du goulot (8), à l'encontre de la direction de la gravité, le liquide de lavage étant déjà décomposé en gouttelettes, avant la zone d'accélération constituée par les goulots (8), ou étant décomposé en gouttelettes au début de la zone d'accélération, caractérisé en ce que les gouttelettes, après passage du deuxième étage (2) doté d'une zone de réaction, qui est située entre les goulots (8) et l'entrée d'un premier séparateur de gouttelettes (3), de préférence avec un rapport liquide de lavage/gaz de fumées < 5 l/m³, sont déviées de 180°, dans des canaux à peu près parallèles et concentriques, pour passer dans la direction de la force de la gravité, pour aller dans le premier séparateur de gouttelettes (3) puis amenées à un autre séparateur de gouttelettes (4).

2. Procédé selon la revendication 1, caractérisé en ce que la vitesse des gaz de fumées dans le goulot (8) du laveur humide (2) est maintenue à une valeur < 23 m/s, de préférence < 18 m/s, et/ou, dans la zone de réaction, à une valeur < 18 m/s, de préférence < 15 m/s, le rapport entre la vitesse des gaz de fumées dans la zone de réaction et la vitesse des gaz de fumées dans la zone d'accélération étant de 0,7, et en ce que, du fait de la vitesse d'écoulement dans le goulot (8) et dans la zone de réaction connexe, non-rétrécie, les gouttelettes évoluant dans le laveur humide (2) sont déviées à l'encontre de la direction de la force de gravité en adoptant une trajectoire de vol verticale et sont écartées autant que possible de la paroi (25) limitrophe, si bien que la proportion d'eau de paroi dans la zone de réaction est diminuée.

3. Procédé selon la revendication 1, caractérisé en ce que la vitesse des gaz de fumées dans le canal d'écoulement du premier séparateur de gouttelettes (3), pendant la déviation de l'écoulement (7), est accélérée dans le but de diminuer les turbulences locales et les retours d'écoulement, et en ce qu'on utilise comme liquide de lavage dans le laveur humide (2) une suspension contenant de la pierre à chaux ou de la poussière de dolomite, ayant un indice de carbonate résiduel élevé, dont la densité est maintenue de préférence à une valeur > 50 g/l, la teneur en carbonate résiduelle dans le laveur humide (2) étant supérieure à ce qu'elle est dans la tour de lavage (1), et où au moins une partie du sulfite, produit lors de l'absorption du SO₂, de la suspension consommée depuis la tour de lavage (1), respectivement le laveur humide (2), est oxydée en sulfate.

4. Procédé selon la revendication 3, caractérisé en ce que, pour assurer l'oxydation du sulfite dans le carter inférieur (13) de la tour de lavage (1) et/ou dans un réservoir d'oxydation (5) est utilisé de l'air et/ou des gaz de fumées (6, 6'), et en ce que, pour obtenir une faible puissance de pompage, le niveau de liquide (11) du réservoir d'oxydation (5) est prévu au niveau des buses d'aspersion (23) du laveur humide (2).

5. Procédé selon la revendication 3, caractérisé en ce qu'à partir du liquide de lavage consommé et s'écoulant, l'hydroxyde de magnésium et/ou les catalyseurs à métaux lourds éventuellement ajoutés sont séparés par précipitation avec du Ca(OH)₂ et recyclés dans le carter inférieur d'oxydation (5).

6. Procédé selon la revendication 1, caractérisé en ce que du (NH₄)₂SO₄ est introduit dans le laveur humide (2) et l'ammonium est éliminé, après addition de Ca(OH)₂ et par séparation à partir du liquide de lavage sortant et/ou de la suspension, et est retourné au laveur humide (2).

7. Procédé selon la revendication 1, caractérisé en ce que le liquide de lavage injecté par des buses est fourni avant ou au début de la zone d'accélération, le jet de buse touchant avant ou au début de la zone d'accélération, la pression amont aux buses étant située à une valeur comprise entre 0,5 et 1,5 bar et le jet de buse formant un angle d'aspersion < 90° et le liquide de paroi dans la zone d'accélération étant dispersé à la fin du goulot (8).

8. Dispositif de mise en oeuvre du procédé selon au moins l'une des revendications 1-7, caractérisé en ce que, en observant dans la direction d'écoulement des gaz de fumées, après une tour de lavage (1) équipée d'un dispositif (12) destiné à pulvériser un liquide de lavage est prévu un laveur humide (2) équipé subséquemment d'un séparateur de gouttelettes (3, 4) à deux étages, en particulier monté sur la tour de lavage (1), à titre de liquide de lavage étant utilisée une suspension contenant du carbonate pour assurer l'absorption des fractions gazeuses acides, et le dispositif comprenant des canaux parallèles et concentriques pour assurer la déviation à 180° des gouttelettes, dans la direction de la force de la gravité, et en ce que, à côté de la tour de lavage (1), est disposé un récipient de suspension (5) réalisé sous la forme d'un réservoir d'oxydation, dont le niveau de liquide (11) est prévu à hauteur des buses d'aspersion (23) du laveur humide (2), et en ce que le laveur humide (2) comporte des goulots d'étranglement (8) destinés à accélérer les gaz de fumées à l'encontre de la direction de la force de gravité, avec un étranglement de l'écoulement de gaz entre 0-50 % de préférence de 20 %, et les buses d'aspersion (23) destinées à introduire le liquide par aspersion étant disposées au-dessous du goulot (8), les buses d'aspersion (23) du laveur humide (2) et le dispositif (12) d'aspersion du liquide de lavage étant disposé dans la tour de lavage (1) de manière que les gouttelettes de liquide soient introduites dans le laveur humide (2) en évoluant dans la direction de l'écoulement de gaz et dans la tour de lavage (1) en évoluant à l'encontre de l'écoulement de gaz, et les goulots (8) étant réalisés sous la forme de goulottes de captage en forme de poches, avec une arête de déchirement-décollement (9).

9. Dispositif selon la revendication 8, caractérisé en ce que le premier étage du séparateur de gouttelettes (3) présente des tôles de guidage (10, 10'), le rapport entre l'espacement des tôles de guidage (10, 10') du canal dans le coude de déviation, et le rayon de courbure du canal d'écoulement étant inférieur à 0,5, et la tôle de guidage extérieure (10') étant réalisée au centre sous la forme d'une goulotte en forme de V avec un angle d'ouverture > 90° de manière que les tôles de guidage (10, 10') dans la région de la zone de réaction fassent en tout point avec l'horizontale un angle α non supérieur à 45°, et en ce que, dans le carter inférieur (13) de la tour de lavage (1), est prévu un dispositif d'extraction (14) destiné à la boue y arrivant, en aval duquel est monté un dispositif de séchage (15) tel qu'un filtre-bande, et en ce que, en cas d'utilisation de CaCO₃ contenant du MgCO₃ pour assurer l'absorption est prévu un dispositif d'addition de chaux (16) pour assurer la conversion du MgSO₄ existant en CaSO₄ et Mg(OH)₂.

10. Dispositif selon la revendication 8, caractérisé en ce que sous les rangées de buses (23) du laveur humide (2) et au-dessus du plan d'aspersion (12) de la tour de lavage (1) est disposé un dispositif de captage de gouttelettes, chaque goulot étant doté d'un diffuseur, et en ce qu'un diffuseur (9') monté après le goulot (8) présente un angle d'ouverture compris entre 7° et 30°, et en ce que le premier étage du séparateur de gouttelettes (3) présente des tôles de guidage (10, 10') formant un canal d'un coude de déviation, le rapport, entre l'espacement des tôles entre les tôles de guidage (10, 10') du canal dans le coude de déviation et le rayon de courbure du canal d'écoulement, étant inférieur à 0,5.
